# EUROPÄISCHE PATENTSCHRIFT

(11) **EP 4 417 828 B1**
(45) Veröffentlichungstag und Bekanntmachung des Hinweises auf die Patenterteilung: **18.02.2026**
(21) Anmeldenummer: 23179580.8
(22) Anmeldetag: 15.06.2023
(51) Int. Cl.: F16C 29/04, F16C 33/40

(54) **LINEARFÜHRUNGSVORRICHTUNG**
LINEAR GUIDING DEVICE
DISPOSITIF DE GUIDAGE LINÉAIRE

(30) Priorität: 17.02.2023 US 202363485606 P
(43) Veröffentlichungstag der Anmeldung: 21.08.2024
(73) Patentinhaber: Schneeberger Holding AG, 4914 Roggwil (CH)
(72) Erfinder: GROLIMUND, Thomas, 4900 Langenthal (CH)
(74) Vertreter: EGLI-EUROPEAN PATENT ATTORNEYS

(56) Entgegenhaltungen:
- EP-A2- 1 277 976
- EP-A2- 1 536 152
- DE-A1- 102004 034 965
- DE-A1- 102015 205 922
- DE-A1- 4 142 821
- JP-A- 2001 165 160
- JP-A- 2003 262 224

## Beschreibung

Die vorliegende Erfindung betrifft eine Linearführungsvorrichtung.

Der Einsatzbereich von Linearführungsvorrichtungen ist sehr vielfältig, z.B. kommen Linearführungsvorrichtungen in Profilschienen, Messsystemen, Lineartischen, Rolltischen, Positioniersystemen, etc. zum Einsatz.

Eine Linearführungsvorrichtung, auch als Linearführung bezeichnet, umfasst im Allgemeinen eine Schiene, die z.B. fest montiert sein kann, und einen Wagen bzw. Schlitten oder Tisch, der mittels an einem Käfig drehbar gelagerten Wälzkörpern linear in einer Längsrichtung der Linearführungsvorrichtung hin und her bewegbar ist. Die an dem Käfig vorgesehenen Wälzkörper liegen abwälzbar sowohl an der Schiene als auch an dem Schlitten an, sodass sich der Käfig bei der Bewegung des Schlittens gegenüber der Schiene um einen definierten Betrag bzw. Hub sowohl relativ zur Schiene als auch zum Schlitten bewegt.

Der Käfighub entspricht dabei idealerweise der Hälfte des Tisch- bzw. Schlittenhubs. Tatsächlich weicht der auftretende Käfighub jedoch davon ab, d.h. der Käfig verschiebt sich, was auch als Käfigwandern bezeichnet wird. Bei den ausgeführten Hubbewegungen wandert der Käfig somit in der Regel kontinuierlich in kleinen Schritten je Hub in eine Richtung, bei vertikalem Einbau der Linearführungsvorrichtung meistens nach unten. Das Käfigwandern kann die Führungsfunktion der Linearführungsvorrichtung massgeblich beeinträchtigen. Insbesondere kann durch das Käfigwandern eine optimale Lastverteilung nicht mehr gegeben sein. Wird nach mehreren kleineren Hüben der volle Hub benötigt, so steht der Käfig an Endteilen der Linearführungsvorrichtung an und kann nicht mehr leichtgängig ausgefahren werden, sodass sich die Führung nur noch unter einem erhöhten Kraftaufwand weiterschieben lässt. Dadurch können Schäden entstehen wie z.B. ein Abrieb oder Gleitflächen an der Laufbahn oder den Wälzkörpern, Verformungen des Käfigs, bis hin zum Herausfallen von Wälzkörpern, Verbiegen oder Abbrechen der Endteile, sowie Schäden an den Antriebselementen.

Das Käfigwandern wird zudem durch weitere Faktoren begünstigt, wie z.B. ungenaue Schienen-, Laufbahnen- und Wälzkörpergeometrien, einem vertikalen Einbau der Linearführungsvorrichtung, einer ungleichmässigen Vorspannung (Montagefehler), auftretenden Beschleunigungen, ungünstigen Arbeitszyklen, Temperaturdifferenzen, Anschlusskonstruktion, sowie ungleichmässige Lastverteilungen.

Das Käfigwandern kann durch das Vorsehen einer Käfigzwangssteuerung, auch als Käfigzwangsführung bezeichnet, unterbunden werden, welche bewirkt, dass sich der Käfig immer um die Hälfte des Hubes verschiebt.

DE 10 2015 205 922 A1 beschreibt einen Linearantrieb, der einen mittels einer Wälzführungseinrichtung an einem Antriebsgehäuse zur Ausführung einer Hubbewegung verschiebbar gelagerten Abtriebsschlitten aufweist. An einem Käfigkörper der Wälzführungseinrichtung ist eine Kopplungsrolle drehbar gelagert, die gleichzeitig an Abrollflächen des Antriebsgehäuses und des Abtriebsschlittens anliegt. Die Mantelfläche der Kopplungsrolle oder eine der Abrollflächen sind elastisch nachgiebig, sodass die Kopplungsrolle bei gleichzeitigem Toleranzausgleich mit Vorspannung an die beiden Abrollflächen angedrückt wird.

US 5,076,715 beschreibt eine Linearführungseinheit mit einem U-förmigen Tisch und einer U-förmigen Schiene, sowie einer Halterung mit als Kugeln ausgebildeten Wälzkörpern für eine relative Linearbewegung zwischen Tisch und Schiene. Zur Verhinderung von Schlupf ist an der Halterung ein Zahnrad angebracht, das in Zahnstangen des Tisches und der Schiene eingreift.

Linearführungsvorrichtungen mit einem Kopplungslement zum Verhindern des Wanderns eines Käfigs der Linearführungsvorrichtung gemäß dem Oberbegriff des Anspruchs 1 sind aus EP 1 277 976 A2 und JP 2003 262224 A bekannt.

Es ist eine Aufgabe der vorliegenden Erfindung, eine alternative bzw. verbesserte Linearführungsvorrichtung bereitzustellen, bei der ein Käfigwandern verhindert werden und/oder ein Aufbau und eine Montage der Linearführungsvorrichtung vereinfacht werden können.

Diese Aufgabe wird durch eine Linearführungsvorrichtung gemäss Anspruch 1 gelöst. Weiterbildungen der Erfindung sind in den abhängigen Ansprüchen angegeben.

Eine erfindungsgemässe Linearführungsvorrichtung umfasst eine Schiene, die eine sich entlang einer Längsrichtung erstreckende erste Vorschubeinrichtung aufweist, einen Schlitten, der gegenüber der Schiene entlang der Längsrichtung verfahrbar vorgesehen ist und eine sich entlang der Längsrichtung erstreckende zweite Vorschubeinrichtung aufweist, einen Käfig, der gegenüber der Schiene und dem Schlitten entlang der Längsrichtung verfahrbar vorgesehen ist, und ein Kopplungselement, das dazu ausgebildet ist, gleichzeitig in die erste und die zweite Vorschubeinrichtung einzugreifen, um bei einem Vorschub des Schlittens relativ zur Schiene entlang der Längsrichtung eine Bewegung des Käfigs gegenüber der Schiene und/oder dem Schlitten zu bewirken. Das Kopplungselement weist zumindest einen Vorsprung auf, der mit einer an der Schiene und/oder dem Schlitten ausgebildeten Anschlagsfläche zusammenwirkt, um das Kopplungselement in der Linearführungsvorrichtung zu halten. Die Linearführungsvorrichtung ist frei von einer Befestigung des Kopplungselements an dem Käfig, sodass das Kopplungselement schwimmend gelagert ist.

Vorzugsweise liegt der zumindest eine Vorsprung des Kopplungselements beabstandet an der Anschlagsfläche der Schiene und/oder des Schlittens an, insbesondere wenn der Schlitten eine Bewegung in Längsrichtung relativ zu der Schiene ausführt, auch als Hubbewegung bezeichnet. Vorzugsweise bildet der zumindest einen Vorsprung des Kopplungselements eine Schulter, die ausgebildet ist, ein unerwünschtes Verschieben des Kopplungselements zu verhindern. Bei einer Bewegung des Schlittens gegenüber der Schiene kann der zumindest eine Vorsprung die Anschlagsfläche beispielsweise berühren und das Kopplungselement somit seitlich schleifend festhalten. Durch den zumindest einen Vorsprung und die Anschlagsfläche kann beispielsweise das Kopplungselement formschlüssig oder beabstandet in der Linearführungsvorrichtung gehalten sein.

Das Kopplungselement ist in der Linearführungsvorrichtung ausschliesslich durch das Zusammenwirken des zumindest einen Vorsprungs mit der Anschlagsfläche ortsfest gelagert oder gehalten. Erfindungsgemäß ist das Kopplungselement ohne eine Verbindung zu dem Käfig vorgesehen, **und** die Linearführungsvorrichtung ist frei von einer Halterung, die das Kopplungselement an dem Käfig hält oder befestigt. Mit anderen Worten wird vorzugsweise durch das Zusammenwirken des zumindest einen Vorsprungs mit der Anschlagsfläche eine Bewegung des Kopplungselements in zumindest eine Richtung quer, vorzugsweise senkrecht, zur Längsrichtung der Linearführungsvorrichtung verhindert. Zugleich wird eine Bewegung des Kopplungselements in der Längsrichtung relativ zur Schiene und/oder zum Schlitten ermöglicht. Das Kopplungselement ist daher erfindungsgemäß schwimmend in der Linearführungsvorrichtung gelagert. Vorzugsweise fungiert das Kopplungselement dabei als ein Mitnehmer, der die Bewegung des Käfigs, auch als Käfighub bezeichnet, bei einem Vorschub (Hubbewegung) des Schlittens relativ zur Schiene bewirkt. Damit kann eine Käfigzwangssteuerung oder Käfigzwangsführung bereitgestellt sein.

Insbesondere kann es sich bei der Linearführungsvorrichtung um eine Miniatur-Linearführungsvorrichtung handeln. Durch den halterungsfreien Einbau des Kopplungselements, d.h. insbesondere ohne das Kopplungselement mittels dessen Achsen oder Vorsprüngen an dem Käfig zu halten, kann beispielsweise der Aufbau insbesondere einer Miniatur-Linearführungsvorrichtung vereinfacht werden. Vorzugsweise ist das Kopplungselement als ein Zahnrad ausgebildet, das um eine Drehachse drehbar in der Linearführungsvorrichtung vorgesehen ist, wobei die Drehachse quer, vorzugsweise senkrecht, zur Längsrichtung verläuft, und sich der zumindest eine Vorsprung in Richtung der Drehachse von dem Zahnrad weg erstreckt. Alternativ oder zusätzlich ist vorzugsweise die erste und/oder zweite Vorschubstruktur als eine Zahnstange ausgebildet. Durch die Ausgestaltung des Kopplungselements als Zahnrad und/oder der Vorschubstruktur als Zahnstange kann beispielsweise eine einfach zu realisierende und/oder kostengünstige Käfigzwangssteuerung oder Käfigzwangsführung bereitgestellt sein.

Vorzugsweise weist der Käfig eine Ausnehmung auf, durch die hindurch sich das Kopplungselement erstreckt, und wobei der Vorsprung des Kopplungselements an einer Begrenzung der Ausnehmung anliegt, um die Bewegung des Käfigs gegenüber der Schiene und/oder dem Schlitten zu bewirken. Dadurch ist es beispielsweise auf einfache Art und Weise möglich, die Bewegung des Käfigs (Käfighub) mit der Bewegung des Schlittens und/oder der Schiene zu koppeln.

Vorzugsweise ist der zumindest eine Vorsprung des Kopplungselements im Wesentlichen zylinderförmig ausgebildet ist, wobei ein Durchmesser des zylinderförmigen Vorsprungs kleiner ist als ein Durchmesser des Kopplungselements. Weiter bevorzugt ist eine Zylinderachse des zylinderförmigen Vorsprungs parallel, insbesondere identisch, zu einer Drehachse des Kopplungselements. Ein zylinderförmiger Vorsprung kann beispielsweise ein Entlanggleiten oder Schleifen des Vorsprungs an der Anschlagsfläche bei einer Relativbewegung zwischen Käfig und Schlitten und/oder Schiene ermöglichen und/oder reibungsbedingte Verluste verringern.

Vorzugsweise ist die Anschlagsfläche eine dem Käfig zugewandte Begrenzung des Schlittens und/oder der Schiene, insbesondere eine Unterseite des Schlittens und/oder eine Oberseite der Schiene, um eine Bewegung des Kopplungselements in Richtung der Schiene und/oder des Schlittens zu verhindern. Vorzugsweise liegt eine radiale Umfangsfläche des zylinderförmigen Vorsprungs an der Anschlagsfläche an. Dadurch kann beispielsweise eine Höhenbewegung des Kopplungselements verhindert werden bzw. das Kopplungselement in der vertikalen Richtung ortsfest gehalten sein.

Alternativ oder zusätzlich weist vorzugsweise die Schiene und/oder der Schlitten eine Nut auf, insbesondere eine sich in der Längsrichtung erstreckende und/oder seitlich der ersten bzw. zweiten Vorschubeinrichtung vorgesehene Nut, und die Anschlagsfläche ist durch eine Wandung der Nut gebildet, um eine Bewegung des Kopplungselements parallel zum Schlitten und/oder zur Schiene zu verhindern. Die Nut kann insbesondere eine in der Unterseite des Schlittens und/oder in der Oberseite der Schiene ausgebildete Vertiefung sein, wobei vorzugsweise eine Seitenflächen der Nut als Anschlagsfläche dient. Dadurch kann beispielsweise eine Horizontalbewegung des Kopplungselements verhindert werden bzw. das Kopplungselement in der horizontalen Richtung ortsfest gehalten sein. Vorzugsweise liegt eine axiale Begrenzung des zylinderförmigen Vorsprungs an der Anschlagsfläche an.

Weiter bevorzugt weist das Kopplungselement zumindest einen ersten Vorsprung auf, der an der Nut der Schiene und/oder des Schlittens anliegt, und einen zweiten Vorsprung, der an der dem Käfig zugewandten Begrenzung des Schlittens und/oder der Schiene anliegt, und wobei vorzugsweise eine Abmessung, insbesondere ein Durchmesser, des ersten Vorsprungs grösser ist als eine Abmessung, insbesondere ein Durchmesser, des zweiten Vorsprungs. Der erste und/oder zweite Vorsprung kann dabei beispielsweise eine Schulter bilden, die ein unerwünschtes Verschieben des Kopplungselements in der horizontalen und/oder vertikalen Richtung, d.h. allgemein senkrecht zur Längsrichtung, verhindern kann. Bei einer Bewegung des Schlittens gegenüber der Schiene kann der zumindest eine Vorsprung (Schulter) die Nut bzw. die dem Käfig zugewandte Begrenzung beispielsweise berühren und das Kopplungselement somit seitlich schleifend festhalten.

Vorzugsweise ist der Käfig zwischen der Schiene und dem Schlitten angeordnet. Alternativ oder zusätzlich weist der Käfig vorzugsweise eine Mehrzahl von Wälzkörpern auf, die jeweils an dem Schlitten und an der Schiene abwälzbar anliegen. Damit ist es beispielsweise auf einfache Art und Weise möglich, eine Wälzkörperführung für eine Relativbewegung des Schlittens in Bezug auf die Schiene bereitzustellen. Vorzugsweise sind die Wälzkörper, auch als Wälzelemente bezeichnet, drehbar im Käfig gelagert, wobei jeder Wälzkörper zugleich an einer Führungsbahn des Schlittens und einer Führungsbahn der Schiene abwälzbar anliegt. Somit kann beispielsweise bei der Hubbewegung des Schlittens relativ zur Schiene in der Längsrichtung der Käfig sowohl relativ zur Schiene als auch zum Wagen bewegt werden, insbesondere um die Hälfte des Hubs. Vorzugsweise stützt sich senkrecht zur Längsrichtung der Schlitten auf die Wälzkörper ab, und der Käfig stützt sich über die Wälzkörper auf der Schiene ab.

Vorzugsweise weist der Käfig einen Grundkörper auf, vorzugsweise einen im Wesentlichen flächig ausgebildeten Grundkörper, und zwei sich von dem Grundkörper weg erstreckende, vorzugsweise senkrecht weg erstreckende, Schenkel, die ausgebildet sind, die Schiene in einem zwischen den beiden Schenkeln gebildeten Zwischenraum aufzunehmen. Alternativ oder zusätzlich ist der Schlitten in einer Ebene senkrecht zur Längsrichtung im Wesentlichen U-förmig ausgebildet, wobei die Schenkel des U-förmigen Schlittens ausgebildet sind, den Käfig in einem zwischen den beiden Schenkeln gebildeten Zwischenraum aufzunehmen.

Dadurch kann beispielsweise ein im Wesentlichen U-förmig ausgebildeter Käfig bereitgestellt sein. Vorzugsweise ist eine Ausnehmung, durch die hindurch sich das Kopplungselement erstreckt, an dem Grundkörper des Käfigs vorgesehen, und/oder die Wälzkörper sind an den Schenkeln des Käfigs vorgesehen.

Vorzugsweise weisen die Schenkel des Schlittens an ihrer Innenseite eine Führungsbahn auf, an der sich die Wälzkörper entlang bewegen können. Vorzugsweise weist die Schiene eine Führungsbahn auf, an der sich die Wälzkörper entlang bewegen können. Vorzugsweise weist der Schlitten einen Grundkörper, insbesondere einen im Wesentlichen flächig ausgebildeten Grundkörper auf, an dem die Schenkel vorgesehen sind. Vorzugsweise ist die zweite Vorschubeinrichtung und/oder die Anschlagsfläche an dem Grundkörper des Schlittens vorgesehen.

Die Linearführungsvorrichtung kann auch umgekehrt aufgebaut sein, d.h. die Schenkel des Käfigs können ausgebildet sein, den Schlitten in dem zwischen ihnen gebildeten Zwischenraum aufzunehmen, und die Schiene ist U-förmig ausgebildet und nimmt den Käfig in einem zwischen ihren Schenkeln gebildeten Zwischenraum auf.

Vorzugsweise umfasst die Linearführungsvorrichtung weiter einen Endanschlag, der die Bewegung des Käfigs gegenüber der Schiene und/oder dem Schlitten in Längsrichtung begrenzt, wobei der Endanschlag vorzugsweise als eine länglich ausgebildete Öffnung im Käfig und eine sich durch die Öffnung erstreckenden Schraube, einen Stift oder eine andere vorstehende Geometrie, die an der Schiene oder dem Schlitten befestigt ist, ausgebildet ist. Damit kann beispielsweise eine Bewegung des Käfigs in der Längsrichtung auf einfache Art und Weise begrenzt werden.

Vorzugsweise umfasst die Linearführungsvorrichtung weiter einen Antrieb, der ausgebildet ist, den Schlitten gegenüber der Schiene entlang der Längsrichtung verfahrbar anzutreiben.

Weitere Zweckmässigkeiten der vorliegenden Erfindung ergeben sich durch die Beschreibung von Ausführungsbeispielen anhand der beigefügten Figuren.
- Fig. 1: zeigt eine schematische, perspektivische Ansicht einer Linearführungsvorrichtung gemäss einer Ausführungsform der vorliegenden Erfindung,
- Fig. 2: zeigt eine schematische, perspektivische Ansicht der in Fig. 1 gezeigten Linearführungsvorrichtung bei abgenommenem Schlitten,
- Fig. 3: zeigt eine schematische, perspektivische und vergrösserte Ansicht des in Fig. 2 mit B gekennzeichneten Bereichs der Linearführungsvorrichtung,
- Fig. 4: zeigt eine schematische, perspektivische Ansicht eines in der Linearführungsvorrichtung der Fig. 1-3 gezeigten vorgesehenen Kopplungselements,
- Fig. 5: zeigt eine schematische Ansicht der in Fig. 1-4 gezeigten Linearführungsvorrichtung in Draufsicht von vorne,
- Fig. 6: zeigt eine schematische und vergrösserte Ansicht des in Fig. 5 mit C gekennzeichneten Bereichs der Linearführungsvorrichtung,
- Fig. 7: zeigt eine schematische Ansicht der in Fig. 1-6 gezeigten Linearführungsvorrichtung im Schnitt entlang der Linie F-F in Fig. 1, und
- Fig. 8: zeigt eine schematische und vergrösserte Ansicht des in Fig. 7 mit E gekennzeichneten Bereichs der Linearführungsvorrichtung.

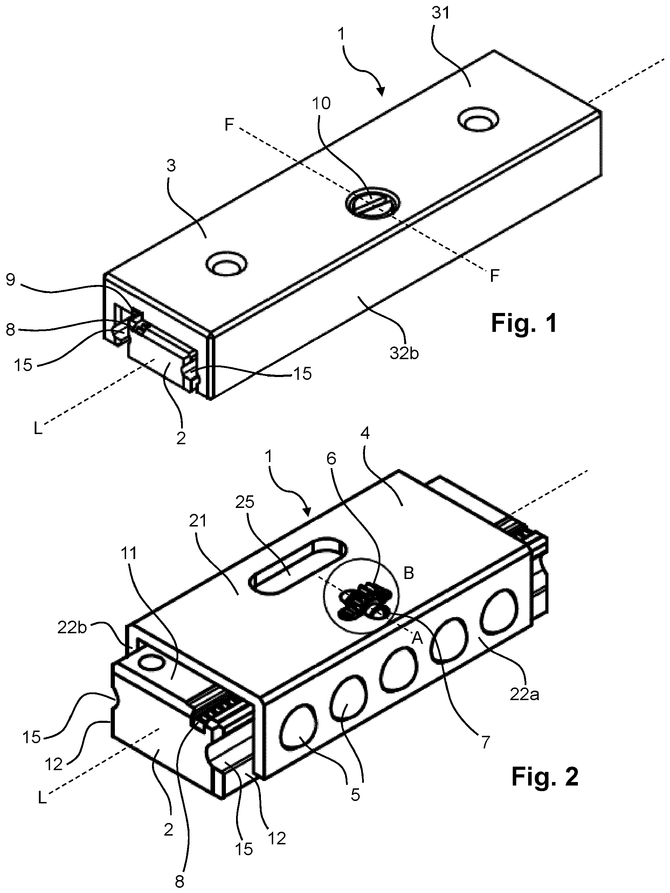

Nachfolgend wird mit Bezug auf die Figuren 1 bis 8 eine Linearführungsvorrichtung gemäss einer Ausführungsform der vorliegenden Erfindung beschrieben.

Die Linearführungsvorrichtung 1 weist eine Schiene 2, einen Wagen oder Schlitten 3 und einen zwischen der Schiene 2 und dem Schlitten 3 angeordneten Käfig 4 auf. Die Schiene 2, der Schlitten 3 und der Käfig 4 weisen eine gemeinsame Längsachse L auf. An dem Käfig 4 ist eine Mehrzahl von Wälzkörpern 5 vorgesehen, die jeweils an dem Schlitten 3 und der Schiene 2 abwälzbar anliegen. Somit ist der Käfig 4 an der Schiene 2 in der Längsrichtung L bewegbar vorgesehen, und der Schlitten 3 ist am Käfig 4 in der Längsrichtung L bewegbar vorgesehen. In der Darstellung der Fig. 1 ist der Käfig 4 durch den Schlitten 3 verdeckt.

Weiter weist die Linearführungsvorrichtung 1 ein Kopplungselement in Form eines Zahnrads 6 auf, das sich durch eine im Käfig 4 vorgesehene Ausnehmung 7 hindurch erstreckt, um in jeweilige, als Zahnstangen 8, 9 ausgebildete, Vorschubeinrichtungen der Schiene 2 und des Schlittens 3 einzugreifen.

Die Schiene 2 weist eine in vorliegender Ausführungsform als Oberseite 11 ausgebildete Begrenzung auf, die dem Käfig 4 bzw. dem Schlitten 3 zugewandt ist. Weiter weist die Schiene 2 zwei Seitenflächen 12 auf, von denen jeweils eine einem der weiter unten beschriebenen Schenkeln 22a, 22b des Käfigs 4 zugewandt ist.

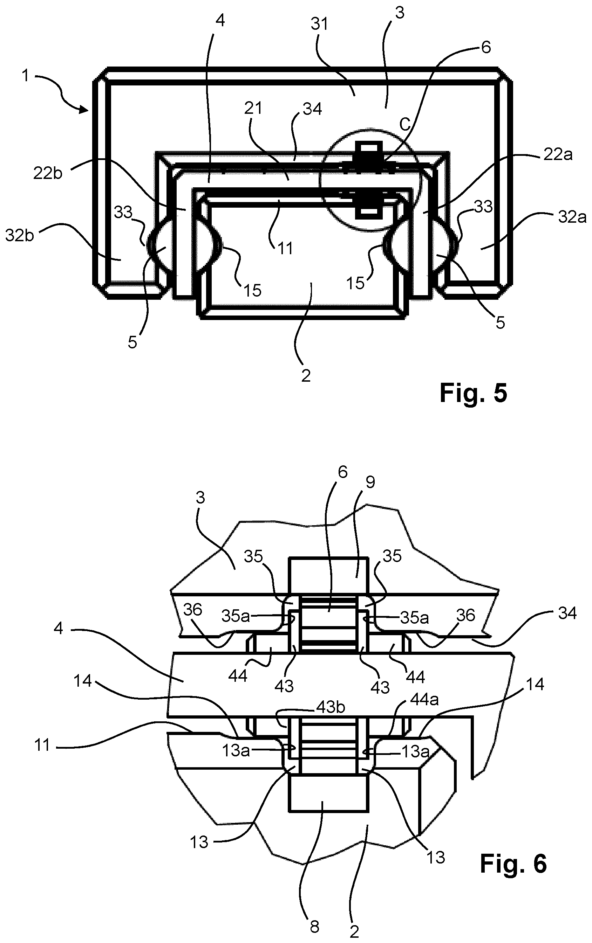

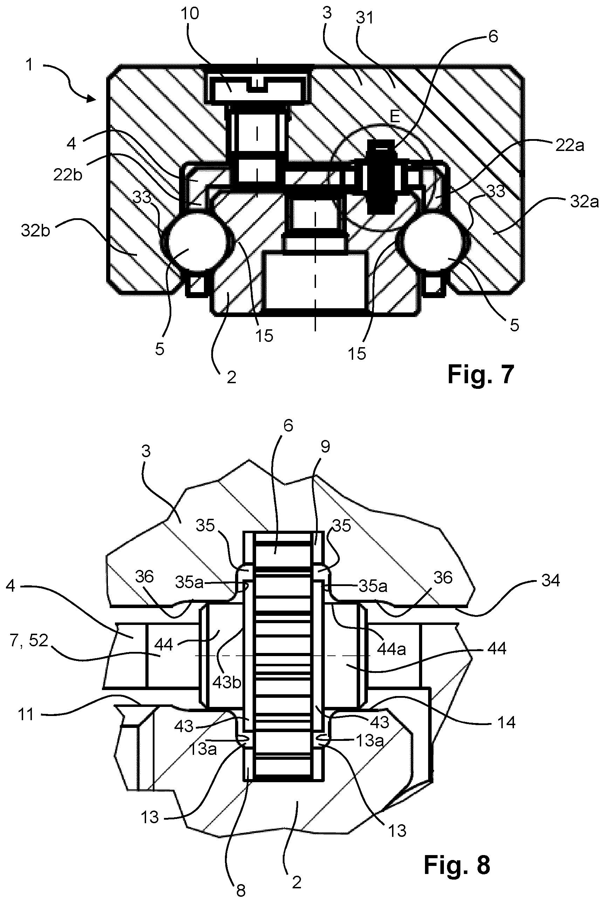

An ihrer Oberseite 11 weist die Schiene 2 die Zahnstange 8 auf, in die das Zahnrad 6 eingreift. Die Zahnstange 8 erstreckt sich an der Oberseite 11 der Schiene 2 in der Längsrichtung L. Die Zahnstange 8 ist nicht-zentrisch in Bezug auf eine sich in der Längsrichtung L erstreckende Mittelachse der Schiene 2 vorgesehen. Mit anderen Worten ist die Zahnstange 8 in Bezug auf die Mittelachse in Richtung einer Seite des Schlittens hin versetzt vorgesehen. Weiter weist die Schiene 2 an ihrer Oberseite 11 zwei sich in der Längsrichtung L erstreckende Nuten 13 auf (s. Fig. 6, 8). In vorliegender Ausführungsform sind die Nuten 13 jeweils seitlich der Zahnstange 8 an der Oberseite 11 der Schiene vorgesehen. Die Nuten 13 sind in Richtung des Käfigs 4, d.h. in vorliegender Ausführungsform nach oben hin, offen ausgebildet. Sie sind dazu ausgebildet, einen weiter unten beschriebenen ersten Vorsprung 43 des Zahnrads 6 aufzunehmen. Eine Seitenwandung 13a der Nut dient dabei als Anschlagsfläche für den ersten Vorsprung 43 des Zahnrads (s. Fig. 6, 8).

Optional ist in der Oberseite 11 seitlich der Nuten 13 jeweils eine Vertiefung 14 vorgesehen (s. Fig. 6, 8), die als eine Anschlagsfläche für die weiter unten beschriebenen zweiten Vorsprünge 44 des Zahnrads 6 dient, wie weiter unten im Detail beschrieben. Alternativ kann die Oberseite 11 auch ohne die Vertiefungen 14 ausgebildet sein, und die zweiten Vorsprünge 44 des Zahnrads 6 können direkt an der Oberseite 11 anliegen, die dann die Anschlagsfläche bildet.

An den Seitenflächen 12 der Schiene 2 ist jeweils eine sich in der Längsrichtung L erstreckende Führungsbahn 15 vorgesehen, an der die Wälzkörper 5 des Käfigs 4 abwälzbar anliegen. In Fig. 1 und 2 ist die Führungsbahn 15 jeweils als ein an der Seitenfläche 12 vorgesehener Vorsprung ausgebildet, auf dem die Wälzkörper aufliegen. Der Käfig 4 stützt sich mit seinen Wälzkörpern 5 auf den Führungsbahnen 15 der Schiene ab.

Die Schiene 2 ist vorzugsweise fest montiert, z.B. in einer Werkzeugmaschine, einem Messsystem, etc.

Der Käfig 4 ist in einem Querschnitt der Linearführungsvorrichtung 1 senkrecht zur Längsrichtung L im Wesentlichen U-förmig ausgebildet. Im Detail weist der Käfig 4 einen in vorliegender Ausbildungsform im Wesentlichen flächig ausgebildeten Grundkörper bzw. eine Grundplatte 21 auf und zwei sich von der Grundplatte 21 weg erstreckende, vorzugsweise senkrecht weg erstreckende, Schenkel 22a, 22b. Die Schenkel 22a, 22b sind so ausgebildet, dass sie zwischen sich einen Zwischenraum bilden, in dem die Schiene 2 zumindest teilweise aufgenommen ist. Bei vorliegender Ausführungsform der Linearführungsvorrichtung 1 ist der Käfig 4 in umgekehrter U-Form (d.h. mit nach oben weisender Grundplatte 21 und nach unten weisender Öffnung der U-Form) auf die Schiene 2 aufgesetzt.

Die Grundplatte 21 des Käfigs 4 weist die oben erwähnte Ausnehmung 7 auf, durch die hindurch sich das Zahnrad 6 erstreckt.

Weiter weist die Grundplatte 21 des Käfigs 4 eine sich in der Längsrichtung L der Linearführungsvorrichtung 1 länglich ausgebildete Öffnung 25 auf (s. Fig. 2). Durch diese Öffnung 25 erstreckt sich eine Schraube 10 (s. Fig. 1, 7), die an der Schiene 2 oder dem Schlitten 3 befestigt ist. Die Enden der länglichen Öffnung 25 in Längsrichtung L bilden einen Endanschlag, der die Bewegung des Käfigs 4 gegenüber der Schiene 2 und/oder dem Schlitten 3 in der Längsrichtung L begrenzt.

Die Wälzkörper 5 des Käfigs 4 sind jeweils an den Schenkeln 22a, 22b des Käfigs vorgesehen. Hierzu sind die Wälzkörper 5 drehbar in den Schenkeln 22a, 22b des Käfigs 4 gelagert und sind entlang der Längsrichtung L voneinander beabstandet, vorzugsweise regelmässig voneinander beabstandet, angeordnet. Die Wälzkörper 5 können beispielsweise als Kugeln und/oder Rollen ausgebildet sein. Sie stehen von den Schenkeln 22a, 22b sowohl zur Innenseite als auch zur Aussenseite des U-förmigen Käfigs 4 vor, sodass sie an den Führungsbahnen 15, 33 der Schiene 2 und des Schlittens 3 abwälzbar anliegen. Somit ist der Käfig 4 sowohl gegenüber der Schiene 2, also auch gegenüber dem Schlitten 3 in Längsrichtung L bewegbar angeordnet.

Der Schlitten 3 ist, ähnlich wie der Käfig 4, im Querschnitt der Linearführungsvorrichtung 1 senkrecht zur Längsrichtung L im Wesentlichen U-förmig ausgebildet. Im Detail weist der Schlitten 3 einen in vorliegender Ausbildungsform im Wesentlichen flächig ausgebildeten Grundkörper bzw. eine Grundplatte 31 auf und zwei sich von der Grundplatte 31 weg erstreckende, vorzugsweise senkrecht weg erstreckende, Schenkel 32a, 32b. Die Schenkel 32a, 32b sind so ausgebildet, dass sie zwischen sich einen Zwischenraum bilden, in dem der Käfig 4 zumindest teilweise aufgenommen ist. Bei der in den Figuren dargestellten Ausführungsform der Linearführungsvorrichtung 1 ist der Schlitten 3 in umgekehrter U-Form (d.h. mit nach oben weisender Grundplatte 31 und nach unten weisender Öffnung der U-Form) auf den Käfig 4 aufgesetzt.

An der Unterseite 34 der Grundplatte 31, d.h. der dem Käfig 4 bzw. der Schiene 2 zugewandten Begrenzung der Grundplatte 31, weist der Schlitten 3 die Zahnstange 9 auf, in die das Zahnrad 6 eingreift (s. Fig. 6, 8). Die Zahnstange 9 erstreckt sich an der Unterseite 34 der Grundplatte 31 in der Längsrichtung L. Die Zahnstange 9 ist nicht-zentrisch in Bezug auf eine sich in der Längsrichtung L erstreckende Mittelachse des Schlittens 3 vorgesehen. Mit anderen Worten ist die Zahnstange 9 in Bezug auf die Mittelachse in Richtung einer Seite des Schlittens hin versetzt vorgesehen. Weiter weist die Unterseite 34 der Grundplatte 31 zwei sich in der Längsrichtung L erstreckenden Nuten 35 auf (s. Fig. 6, 8). In vorliegender Ausführungsform sind die Nuten 35 jeweils seitlich der Zahnstange 9 an der Unterseite 34 der Grundplatte 31 vorgesehen. Die Nuten 35 sind in Richtung des Käfigs 4, d.h. in vorliegender Ausführungsform nach unten hin, offen ausgebildet. Sie sind dazu ausgebildet, den weiter unten beschriebenen ersten Vorsprung 43 des Zahnrads 6 aufzunehmen. Eine Seitenwandung 35a der Nut dient dabei als Anschlagsfläche für den ersten Vorsprung 43 des Zahnrads (s. Fig. 6, 8).

Optional ist in der Unterseite 34 der Grundplatte 31 seitlich der Nuten 35 jeweils eine Vertiefung 36 vorgesehen (s. Fig. 6, 8), die als eine Anschlagsfläche für die weiter unten beschriebenen zweiten Vorsprünge 44 des Zahnrads 6 dienen, wie weiter unten im Detail beschrieben. Alternativ kann die Unterseite 34 der Grundplatte 31 auch ohne die Vertiefungen 36 ausgebildet sein, und die zweiten Vorsprünge 44 des Zahnrads 6 können direkt an der Unterseite 34 der Grundplatte 31 anliegen, die dann die Anschlagsfläche bildet.

An der Innenseite, d.h. der dem Käfig 4 zugewandten Seite, der Schenkel 32a, 32b weist der Schlitten 3 sich in der Längsrichtung L erstreckende Führungsbahnen 33 auf, an denen die Wälzkörper 5 des Käfigs 4 abwälzbar anliegen. Der Schlitten stützt sich mit den Führungsbahnen 33 auf den Wälzkörpern 5 des Käfigs 4 ab.

Weiter weist die Linearführungsvorrichtung 1 einen in den Figuren nicht näher gezeigten Antrieb auf, der ausgebildet ist, den Schlitten 3 gegenüber der Schiene 2 entlang der Längsrichtung L verfahrbar anzutreiben.

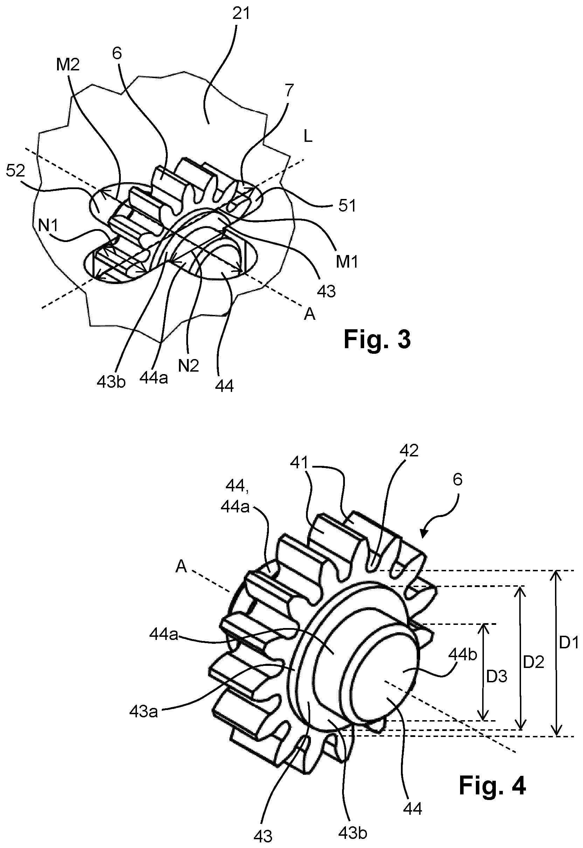

Im Folgenden wird das Zahnrad 6 mit Bezug auf Fig. 4 näher beschrieben. Das Zahnrad 6 ist um eine Drehachse A drehbar in der Linearführungsvorrichtung 1 vorgesehen, wobei die Drehachse A senkrecht zur Längsrichtung L vorgesehen ist (s. auch Fig. 2). Das Zahnrad 6 umfasst eine Mehrzahl von in Umfangsrichtung durch Lücken 42 voneinander beanstandete Zähne 41, die ausgebildet sind, in die Zahnstangen 8, 9 der Schiene 2 und des Schlittens 3 (s. Fig. 2, 5-8) einzugreifen. Die Böden der Lücken 42 definieren einen ersten Durchmesser D1 des Zahnrads 6.

Weiter weist das Zahnrad 6 einen ersten Vorsprung 43 auf, der ausgebildet ist, gleichzeitig an der Nut 13 der Schiene 2 und der Nut 35 des Schlittens 3 anzuliegen, und einen zweiten Vorsprung 44, der ausgebildet ist, gleichzeitig an der Oberseite 11 der Schiene 2 bzw. der darin ausgebildeten Vertiefung 14 und an der Unterseite 34 des Schlittens 3 bzw. der darin ausgebildeten Vertiefung 36 anzuliegen.

In vorliegender Ausführungsform sind der erste Vorsprung 43 und der zweite Vorsprung 44 jeweils zylinderförmig ausgebildet, mit der Drehachse A des Zahnrads als Zylinderachsen. Im Detail weist jeder der Vorsprünge 43, 44 eine Umfangsfläche 43a, 44a auf, die die Mantelfläche des zylinderförmigen Vorsprungs bildet, und eine Stirnseite 43b, 44b, die die Grundfläche des zylinderförmigen Vorsprungs bildet.

Der erste Vorsprung 43 weist senkrecht zur Drehachse A einen zweiten Durchmesser D2 auf, der kleiner ist als der erste Durchmesser D1 des Zahnrads 6. Der zweite Vorsprung 44 weist senkrecht zur Drehachse A einen dritten Durchmesser D3 auf, der kleiner ist als der erste Durchmesser D1 des Zahnrads 6 und in vorliegender Ausführungsform auch kleiner als der zweite Durchmesser D2 des ersten Vorsprungs 43. Der erste Vorsprung 43 ist an dem Zahnrad 6 vorgesehen und erstreckt sich in Richtung der Drehachse A von dem Zahnrad 6 weg. Der zweite Vorsprung 44 ist an dem ersten Vorsprung 43 vorgesehen und erstreckt sich in Richtung der Drehachse A von dem ersten Vorsprung 43 weg.

Eine Breite des ersten Vorsprungs 43 in Richtung der Drehachse A ist so gewählt, dass die Stirnseite 43b des ersten Vorsprungs an der Seitenwandung 13a der Nut 13 der Schiene 2 und der der Seitenwandung 35a der Nut 35 des Schlittens 3 anliegt, oder im Wesentlichen anliegt, wenn das Zahnrad in der Linearführungsvorrichtung 1 vorgesehen ist. Der dritte Durchmesser D3 des zweiten Vorsprungs 44 ist so gewählt, dass seine Umfangsfläche 44a an der Vertiefung 14 der Oberseite 11 der Schiene 2, oder der Oberseite 11 selbst, und an der Vertiefung 36 der Unterseite 34 des Schlittens 4, oder der Unterseite 34 des Schlittens selbst, anliegt wenn das Zahnrad 6 in der Linearführungsvorrichtung 1 vorgesehen ist. Die Seitenwandungen 13a, 35a der Nuten 13, 35 dienen somit als Anschlagsflächen für den ersten Vorsprung 43 bzw. dessen Stirnseite 43b, und die Vertiefungen 14, 36 oder die Oberseite 11 der Schiene 2 und Unterseite 34 des Schlittens 3 dienen als Anschlagsflächen für den zweiten Vorsprung 44 bzw. dessen Umfangsfläche 44a.

In vorliegender Ausführungsform weist das Zahnrad jeweils zwei erste Vorsprünge 43 und zwei zweite Vorsprünge 44 auf, die paarweise auf gegenüberliegenden Seiten des Zahnrads 6 entlang der Drehachse A angeordnet sind. In der Ansicht der Fig. 4 sind die hinteren Vorsprünge teilweise durch das Zahnrad verdeckt.

Im Folgenden wird die Ausnehmung 7 in der Grundplatte 21 des Käfigs 4, durch die hindurch sich das Zahnrad 6 erstreckt, mit Bezug auf Fig. 3 und 4 näher beschrieben. Die Ausnehmung 7 weist einen ersten Ausnehmungsabschnitt 51 und einen zweiten Ausnehmungsabschnitt 52 auf, die jeweils länglich ausgebildet sind und sich senkrecht bzw. kreuzförmig schneiden. Der erste Ausnehmungsabschnitt 51 ist zur Aufnahme des Zahnrads 6 mit den daran vorgesehenen ersten Vorsprüngen 43 ausgebildet, und der zweite Ausnehmungsabschnitt 52 ist zur Aufnahme der zweiten Vorsprünge 44 des Zahnrads 6 ausgebildet.

Im Detail erstreckt sich der erste Ausnehmungsabschnitt 51 entlang der Längsrichtung L der Linearführungsvorrichtung 1 über eine Länge M1, die grösser als eine Breite N1 des ersten Ausnehmungsabschnitts 51 senkrecht zur Längsrichtung L ist. Die Länge M1 des ersten Ausnehmungsabschnitts 51 ist grösser als ein maximaler Durchmesser des Zahnrads 6, der durch die freien Enden der Zähne 41 des Zahnrads definiert ist, sodass das Zahnrad 6 frei um seine Drehachse A drehbar ist, wenn es in der Ausnehmung 7 vorgesehen ist. Die Breite N1 des ersten Ausnehmungsabschnitts 51 ist grösser oder gleich gross wie eine Breite des Zahnrads 6 zwischen den Stirnseiten 43b der auf den gegenüberliegenden Seiten des Zahnrads 6 angeordneten ersten Vorsprüngen 43 entlang der Drehachse A.

Der zweite Ausnehmungsabschnitt 52, erstreckt sich senkrecht zur Längsrichtung L der Linearführungsvorrichtung 1 (d.h. entlang der Drehachse A des Zahnrads 6) über eine Länge M2, die grösser ist als eine Breite N2 des zweiten Ausnehmungsabschnitts 52 in Längsrichtung L. Die Länge M2 des zweiten Ausnehmungsabschnitts 52 ist grösser als eine Gesamtbreite des Zahnrads 6 zwischen den Stirnseiten 44b (s. Fig. 4) der auf den gegenüberliegenden Seiten des Zahnrads 6 angeordneten zweiten Vorsprünge 44 entlang der Drehachse A. Die Breite N2 des zweiten Ausnehmungsabschnitts 52 ist grösser oder gleich gross wie der dritte Durchmesser D3 des zweiten Vorsprungs 44 des Zahnrads 6.

Der zweite Ausnehmungsabschnitt 52 ist so ausgebildet, dass die darin vorgesehenen zweiten Vorsprünge 44 des Zahnrads 6 an der Wandung, d.h. Begrenzung, des zweiten Ausnehmungsabschnitts 52 in der Längsrichtung L der Linearführungsvorrichtung 1 anstossen können, um eine Bewegung des Zahnrads 6 in der Längsrichtung L auf den Käfig 4 zu übertragen. Mit anderen Worten wirkt das Zahnrad 6 als ein Mitnehmer für den Käfig 4 bei einer Bewegung in der Längsrichtung L.

Das Zahnrad 6 ist in vorliegender Ausführungsform der Linearvorrichtung 1 nicht am Käfig 4 befestigt. Vielmehr ist das Zahnrad 6 lediglich durch das Zusammenwirken der Vorsprünge 43, 44 mit den entsprechenden, an der Schiene 2 und dem Schlitten 3 ausgebildeten Anschlagsflächen in der Linearführungsvorrichtung 1 schwimmend gehalten bzw. befestigt.

Wie am besten aus Fig. 6 und 8 ersichtlich, liegen die Stirnseiten 43b der beiden ersten Vorsprünge 43 des Zahnrads 6 im eingebauten Zustand an den Seitenwandungen 13a, 35a der in der Schiene 2 und im Schlitten 3 ausgebildeten Nuten 13, 35 an, oder liegen beabstandet an. Dadurch wird eine Bewegung des Zahnrads 6 senkrecht zur Längsrichtung L und parallel zur Schiene 2 und zum Schlitten 3, bei vorliegender Ausführungsform eine seitliche Bewegung des Zahnrads 6, verhindert. Zudem liegen die Umfangsflächen 44a der beiden zweiten Vorsprünge 44 an den in der Unterseite 34 des Schlittens 3 und der Oberseite 11 der Schiene ausgebildeten Vertiefungen 14, 36 an. Dadurch wird eine Bewegung des Zahnrads 6 senkrecht zur Längsrichtung L und in Richtung der Schiene 2 oder in Richtung des Schlittens 3, bei vorliegender Ausführungsform eine Höhenbewegung des Zahnrads 6, verhindert.

Mit anderen Worten ist das Zahnrad 6 durch die Seitenwandungen 13a, 35a der Nuten 13, 35 und die Vertiefungen 14, 36 (oder die Unterseite 34 des Schlittens 3 und die Oberseite 11 der Schiene 2 selbst) als Anschlagsflächen in Bezug auf Bewegungen senkrecht zur Längsrichtung L ortsfest schwimmend in der Linearführungsvorrichtung 1 gehalten. Eine zusätzliche Halterung für das Zahnrad an dem Käfig ist nicht erforderlich.

Im Betrieb der Linearführungsvorrichtung wird durch den, in den Figuren nicht gezeigten, Antrieb eine Antriebskraft auf den Schlitten 3 ausgeübt, die den Schlitten 3 um einen festgelegten Betrag, auch als Hub bezeichnet, in der Längsrichtung L gegenüber der Schiene 2 bewegt. Dabei rollt das Zahnrad 6 zwischen den Zahnstangen 8, 9 um die Hälfte des Verfahrbetrags des Schlittens 3 (halber Hub) entlang der Längsrichtung L gegenüber der Schiene 2 ab. Bei der Bewegung des Zahnrads 6 rollen dessen Vorsprünge 43, 44 schleifend auf den Anschlagsflächen des Schlittens 3 und der Schiene 2 ab. Dadurch kann eine Bewegung des Zahnrads 6 senkrecht zur Längsrichtung L, d.h. in der Höhenrichtung und in der Breitenrichtung der Linearführungsvorrichtung, verhindert werden. Die Umfangsfläche 44a der zweiten Vorsprünge gelangt dabei in Kontakt mit der Wandung des zweiten Ausnehmungsabschnitts 52 der Ausnehmung 7 des Käfigs 4 und bewirkt, dass sich der Käfig 4 zusammen mit dem Zahnrad 6 in der Längsrichtung L um die Hälfte des Verfahrbetrags des Schlittens 3 (halber Hub) gegenüber der Schiene 2 bewegt. Somit ist der Käfig 4 in seiner Bewegung entlang der Längsrichtung L mit der Bewegung des Schlittens 3 entlang der Schiene 2 gekoppelt. Mit anderen Worten wirkt das Zahnrad als ein Mitnehmer für den Käfig 4 bei einer Bewegung in der Längsrichtung L.

Alternativ oder zusätzlich zu dem Bereitstellen der mit der Schraube 10 zusammenwirkenden länglichen Öffnung 25, deren Enden in Längsrichtung L einen Endanschlag für die Bewegung des Käfigs 4 gegenüber der Schiene 2 und/oder dem Schlitten 3 in der Längsrichtung L bilden, kann ein Endanschlag durch eine entsprechende Ausgestaltung der Nuten 13, 35 ausgebildet sein. Beispielsweise können die Nuten als Endanschlag in der Längsrichtung L Vorsprünge aufweisen, gegen die das Zahnrad 6 anstösst, um die Bewegung des Zahnrads 6 in der Längsrichtung L zu begrenzen.

Die vorliegende Erfindung ist nicht auf die vorhergehend beschriebene und in den Figuren dargestellte Ausführungsform der Linearführungsvorrichtung beschränkt. Vielmehr sind Modifikationen der Linearführungsvorrichtung möglich. Beispielsweise können die einzelnen Elemente in ihrer Grösse und/oder Form von den beschriebenen abweichen. Zum Beispiel kann die Form des ersten Vorsprungs 43 und/oder des zweiten Vorsprungs 44 von einer Zylinderform abweichen.

Anstelle des Zahnrads kann ein anderes Kopplungselement vorgesehen sein, welches ausgebildet ist, gleichzeitig in die erste und die zweite Vorschubeinrichtung der Schiene bzw. des Schlittens einzugreifen, um bei einem Vorschub des Schlittens relativ zur Schiene eine Bewegung des Käfigs gegenüber der Schiene und/oder dem Schlitten zu bewirken. Dementsprechend können die Vorschubeinrichtungen auch anders als die oben beschriebenen Zahnstangen ausgebildet sein. Beispielsweise kann das Kopplungselement für einen Rotationsvorschub im Zusammenwirken mit den Vorschubeinrichtungen ausgebildet sein, wobei eine Drehachse des Kopplungselements vorzugsweise senkrecht zur Längsrichtung der Schiene vorgesehen ist, und/oder wobei die Drehachse vorzugsweise relativ zur Schiene und dem Schlitten fixiert ist.

## Patentansprüche

1. Linearführungsvorrichtung, umfassend
eine Schiene (2), die eine sich entlang einer Längsrichtung (L) erstreckende erste Vorschubeinrichtung (8) aufweist,
einen Schlitten (3), der gegenüber der Schiene (2) entlang der Längsrichtung (L) verfahrbar vorgesehen ist und eine sich entlang der Längsrichtung (L) erstreckende zweite Vorschubeinrichtung (9) aufweist,
einen Käfig (4), der gegenüber der Schiene (2) und dem Schlitten (3) entlang der Längsrichtung (L) verfahrbar vorgesehen ist, und
ein Kopplungselement (6), das dazu ausgebildet ist, gleichzeitig in die erste und die zweite Vorschubeinrichtung einzugreifen, um bei einem Vorschub des Schlittens (3) relativ zur Schiene (2) entlang der Längsrichtung (L) eine Bewegung des Käfigs (4) gegenüber der Schiene (2) und/oder dem Schlitten (3) zu bewirken, **dadurch gekennzeichnet,**
**dass** das Kopplungselement (6) zumindest einen Vorsprung (43, 44) aufweist, der mit einer an der Schiene und/oder dem Schlitten ausgebildeten Anschlagsfläche (13a, 14, 35a, 36) zusammenwirkt, um das Kopplungselement (6) in der Linearführungsvorrichtung (1) zu halten, wobei die Linearführungsvorrichtung (1) frei von einer Befestigung des Kopplungselements (6) an dem Käfig (4) ist, sodass das Kopplungselement (6) schwimmend gelagert ist.

2. Linearführungsvorrichtung nach Anspruch 1, wobei das Kopplungselement als ein Zahnrad (6) ausgebildet ist, das um eine Drehachse (A) drehbar in der Linearführungsvorrichtung (1) vorgesehen ist, wobei die Drehachse (A) quer, vorzugsweise senkrecht, zur Längsrichtung (L) verläuft, und sich der zumindest eine Vorsprung (43, 44) in Richtung der Drehachse (A) von dem Zahnrad (6) weg erstreckt.

3. Linearführungsvorrichtung nach Anspruch 1 oder 2, wobei der Käfig (4) eine Ausnehmung (7, 51, 52) aufweist, durch die hindurch sich das Kopplungselement (6) erstreckt, und wobei der Vorsprung (43, 44) des Kopplungselements an einer Begrenzung der Ausnehmung anliegt, um die Bewegung des Käfigs (4) gegenüber der Schiene (2) und/oder dem Schlitten (3) zu bewirken.

4. Linearführungsvorrichtung nach einem der Ansprüche 1 bis 3, wobei der zumindest eine Vorsprung (43, 44) des Kopplungselements im Wesentlichen zylinderförmig ausgebildet ist, wobei ein Durchmesser (D2, D3) des zylinderförmigen Vorsprungs kleiner ist als ein Durchmesser (D1) des Kopplungselements.

5. Linearführungsvorrichtung nach einem der Ansprüche 1 bis 4, wobei die Anschlagsfläche eine dem Käfig (4) zugewandte Begrenzung (11, 14, 34, 36) des Schlittens (3) und/oder der Schiene (2) ist, insbesondere eine Unterseite (34, 36) des Schlittens (3) und/oder eine Oberseite (11, 14) der Schiene (2), um eine Bewegung des Kopplungselements (6) in Richtung der Schiene (2) und/oder des Schlittens (3) zu verhindern.

6. Linearführungsvorrichtung nach einem der Ansprüche 1 bis 5, wobei die Schiene (2) und/oder der Schlitten (3) eine Nut (13, 35) aufweist, insbesondere eine sich in der Längsrichtung (L) erstreckende und/oder seitlich der ersten bzw. zweiten Vorschubeinrichtung (8, 9) vorgesehene Nut, und die Anschlagsfläche durch eine Wandung (13a, 35a) der Nut gebildet ist, um eine Bewegung des Kopplungselements (6) parallel zum Schlitten (3) und/oder zur Schiene (2) zu begrenzen.

7. Linearführungsvorrichtung nach Anspruch 5 und 6, wobei das Kopplungselement (6) zumindest einen ersten Vorsprung (43) aufweist, der an der Nut (13, 35) der Schiene und/oder des Schlittens anliegt, und einen zweiten Vorsprung (44), der an der dem Käfig (4) zugewandten Begrenzung (11, 14, 34, 36) des Schlittens und/oder der Schiene anliegt, und wobei vorzugsweise eine Abmessung, insbesondere ein Durchmesser (D2), des ersten Vorsprungs (43) grösser ist als eine Abmessung, insbesondere ein Durchmesser (D3), des zweiten Vorsprungs (44).

8. Linearführungsvorrichtung nach einem der Ansprüche 1 bis 7, wobei der Käfig (4) zwischen der Schiene (2) und dem Schlitten (3) angeordnet ist.

9. Linearführungsvorrichtung nach einem der Ansprüche 1 bis 8, wobei der Käfig (4) eine Mehrzahl von Wälzkörpern (5) aufweist, die jeweils an dem Schlitten (3) und an der Schiene (2) abwälzbar anliegen.

10. Linearführungsvorrichtung nach einem der Ansprüche 1 bis 9, wobei der Käfig (4) einen Grundkörper (21), vorzugsweise einen im Wesentlichen flächig ausgebildeten Grundkörper, aufweist und zwei sich von dem Grundkörper (21) weg erstreckende, vorzugsweise senkrecht weg erstreckende, Schenkel (22a, 22b), die ausgebildet sind, die Schiene (2) in einem zwischen den beiden Schenkeln gebildeten Zwischenraum aufzunehmen.

11. Linearführungsvorrichtung nach einem der Ansprüche 1 bis 10, wobei der Schlitten (3) in einer Ebene senkrecht zur Längsrichtung (L) im Wesentlichen U-förmig ausgebildet ist, wobei die Schenkel (32a, 32b) des U-förmigen Schlittens ausgebildet sind, den Käfig (4) in einem zwischen den beiden Schenkeln gebildeten Zwischenraum aufzunehmen.

12. Linearführungsvorrichtung nach einem der Ansprüche 1 bis 11, weiter umfassend einen Endanschlag, der die Bewegung des Käfigs (4) gegenüber der Schiene (2) und/oder dem Schlitten (3) in Längsrichtung (L) begrenzt, wobei der Endanschlag vorzugsweise als eine länglich ausgebildete Öffnung (25) im Käfig (4) und einer sich durch die Öffnung erstreckenden Schraube (10), die an der Schiene (2) oder dem Schlitten (3) befestigt ist, ausgebildet ist.

13. Linearführungsvorrichtung nach einem der Ansprüche 1 bis 12, wobei die erste und/oder zweite Vorschubstruktur als eine Zahnstange (8, 9) ausgebildet ist.

14. Linearführungsvorrichtung nach einem der Ansprüche 1 bis 13, weiter umfassend einen Antrieb, der ausgebildet ist, den Schlitten (3) gegenüber der Schiene (2) entlang der Längsrichtung (L) verfahrbar anzutreiben.

## Claims

1. Linear guide device, comprising
a rail (2), which has a first feed device (8) that extends along a longitudinal direction (L),
a carriage (3), which is provided to be movable along the longitudinal direction (L) in relation to the rail (2), and has a second feed device (9) extending along the longitudinal direction (L),
a cage (4), which is provided to be movable along the longitudinal direction (L) in relation to the rail (2) and the carriage (3), and
a coupling element (6), which is designed to engage into the first and the second feed device simultaneously, so as to make the cage (4) move in relation to the rail (2) and/or the carriage (3) while feeding the carriage (3) relative to the rail (2) along the longitudinal direction (L), **characterized in that**
the coupling element (6) has at least one projection (43, 44), which interacts with an impact surface (13a, 14, 35a, 36) formed on the rail and/or on the carriage, so as to keep the coupling element (6) in the linear guide device (1), wherein the linear guide device (1) is free from any attachment of the coupling element (6) to the cage (4), so that the coupling (6) is mounted on floating bearings.

2. The linear guide device according to claim 1, wherein the coupling element is designed as a gear (6), which is provided so that it can rotate around an axis of rotation (A) in the linear guide device (1), wherein the axis of rotation (A) runs transverse, preferably perpendicular, to the longitudinal direction (L), and the at least one projection (43, 44) extends away from the gear (6) in the direction of the axis of rotation (A).

3. The linear guide device according to claim 1 or 2, wherein the cage (4) has a recess (7, 51, 52), through which the coupling element (6) extends, and wherein the projection (43, 44) of the coupling element abuts against a border of the recess, so as to cause the cage (4) to move in relation to the rail (2) and/or the carriage (3).

4. The linear guide device according to one of claims 1 to 3, wherein the at least one projection (43, 44) of the coupling element is essentially cylindrical in design, wherein a diameter (D2, D3) of the cylindrical projection is smaller than a diameter (D1) of the coupling element.

5. The linear guide device according to one of claims 1 to 4, wherein the impact surface is a border (11, 14, 34, 36) of the carriage (3) and/or the rail (2) facing the cage (4), in particular a lower side (34, 36) of the carriage (3) and/or an upper side (11, 14) of the rail (2), so as to prevent the coupling element (6) from moving in the direction of the rail (2) and/or the carriage (3).

6. The linear guide device according to one of claims 1 to 5, wherein the rail (2) and/or the carriage (3) have a groove (13, 35), in particular a groove that extends in the longitudinal direction (L) and/or is provided to the side of the first or second feed device (8, 9), and the impact surface is formed by a wall (13a, 35a) of the groove, so as to limit a movement by the coupling element (6) parallel to the carriage (3) and/or to the rail (2).

7. The linear guide device according to claim 5 and 6, wherein the coupling element (6) has at least one first projection (43), which abuts against the groove (13, 35) of the rail and/or the carriage, and a second projection (44), which abuts against the border (11, 14, 34, 36) of the carriage and/or the rail facing the cage (4), and wherein preferably a dimension, in particular a diameter (D2), of the first projection (43) is larger than a dimension, in particular a diameter (D3), of the second projection (44).

8. The linear guide device according to one of claims 1 to 7, wherein the cage (4) is arranged between the rail (2) and the carriage (3).

9. The linear guide device according to one of claims 1 to 8, wherein the cage (4) has a plurality of roller bodies (5), which each rollably abut against the carriage (3) and against the rail (2).

10. The linear guide device according to one of claims 1 to 9, wherein the cage (4) has a base body (21), preferably a base body with an essentially flat design, and two legs (22a, 22b) extending away, preferably perpendicularly away, from the base body (21), which are designed to accommodate the rail (2) in a gap formed between the two legs.

11. The linear guide device according to one of claims 1 to 10, wherein the carriage (3) has essentially a U-shaped design in a plane perpendicular to the longitudinal direction (L), wherein the legs (32a, 32b) of the U-shaped carriage are designed to accommodate the cage (4) in a gap formed between the two legs.

12. The linear guide device according to one of claims 1 to 11, further comprising an end stop, which limits the movement of the cage (4) in relation to the rail (2) and/or the carriage (3) in a longitudinal direction (L), wherein the end stop preferably is designed as an oblong opening (25) in the cage (4) and a screw (10) extending through the opening and fastened to the rail (2) or the carriage (3).

13. The linear guide device according to one of claims 1 to 12, wherein the first and/or the second feed structure is designed as a toothed rack (8, 9).

14. The linear guide device according to one of claims 1 to 13, further comprising a drive, which is designed to movably drive the carriage (3) in relation to the rail (2) along the longitudinal direction (L).

## Revendications

1. Dispositif de guidage linéaire, comprenant
un rail (2), qui comporte un premier système d'avance (8) s'étendant le long d'une direction longitudinale (L),
un coulisseau (3), qui est prévu pouvant se déplacer par rapport au rail (2) le long de la direction longitudinale (L) et un deuxième système d'avance (9) s'étendant le long de la direction longitudinale (L),
une cage (4), qui est prévue pouvant se déplacer par rapport au rail (2) et au coulisseau (3) le long de la direction longitudinale (L) et
un élément d'accouplement (6), qui est constitué pour venir en prise simultanément dans le premier et dans le deuxième système d'avance pour produire un mouvement de la cage (4) par rapport au rail (2) et/ou au coulisseau (3) lors d'une avance du coulisseau (3) par rapport au rail (2) le long de la direction longitudinale (L), **caractérisé en ce que**
l'élément d'accouplement (6) comporte au moins une saillie (43, 44), qui coopère avec une surface de butée (13a, 14, 35a, 36) constituée sur le rail et/ou le coulisseau pour maintenir l'élément d'accouplement (6) dans le dispositif de guidage linéaire (1), sachant que le dispositif de guidage linéaire (1) est dépourvu d'une fixation de l'élément d'accouplement (6) sur la cage (4) de telle manière que l'élément d'accouplement (6) est logé de façon flottante.

2. Dispositif de guidage linéaire selon la revendication 1, sachant que l'élément d'accouplement est constitué sous la forme d'un engrenage (6), qui est prévu pour tourner autour d'un axe de rotation (A) dans le dispositif de guidage linéaire (1), sachant que l'axe de rotation (A) passe transversalement, de préférence perpendiculairement à la direction longitudinale (L) et qu'au moins une saillie (43, 44) s'éloigne de l'engrenage (6) en direction de l'axe de rotation (A).

3. Dispositif de guidage linéaire selon la revendication 1 ou 2, sachant que la cage (4) comporte un évidement (7, 51, 52) à travers lequel s'étend l'élément d'accouplement (6) et sachant que la saillie (43, 44) de l'élément d'accouplement vient s'appliquer à une limitation de l'évidement pour produire le mouvement de la cage (4) par rapport au rail (2) et/ou au coulisseau (3).

4. Dispositif de guidage linéaire selon l'une quelconque des revendications 1 à 3, sachant qu'au moins une saillie (43, 44) de l'élément d'accouplement est constituée pour l'essentiel de forme cylindrique, sachant qu'un diamètre (D2, D3) de la saillie cylindrique est plus petit qu'un diamètre (D1) de l'élément d'accouplement.

5. Dispositif de guidage linéaire selon l'une quelconque des revendications 1 à 4, sachant que la surface de butée est une limitation (11, 14, 34, 36) du coulisseau (3) et/ou du rail (2) tournée vers la cage (4), en particulier une face inférieure (34, 36) du coulisseau (3) et/ou une face supérieure (11, 14) du rail (2) pour éviter un mouvement de l'élément d'accouplement (6) en direction du rail (2) et/ou du coulisseau (3).

6. Dispositif de guidage linéaire selon l'une quelconque des revendications 1 à 5, sachant que le rail (2) et/ou le coulisseau (3) comporte une rainure (13, 35), en particulier une rainure s'étendant dans la direction longitudinale (L) et/ou prévue latéralement au premier ou deuxième système d'avance (8, 9) et la surface de butée est formée par une paroi (13a, 35a) de la rainure pour limiter un mouvement de l'élément d'accouplement (6) parallèlement au coulisseau (3) et/ou au rail (2).

7. Dispositif de guidage linéaire selon les revendications 5 et 6, sachant que l'élément d'accouplement (6) comporte au moins une première saillie (43), qui vient en application sur la rainure (13, 35) du rail et/ou du coulisseau et une deuxième saillie (44), qui vient en application sur la limitation (11, 14, 34, 36) du coulisseau et/ou du rail tournée vers la cage (4) et sachant de préférence qu'une dimension, en particulier un diamètre (D2), de la première saillie (43) est plus grande qu'une dimension, en particulier un diamètre (D3), de la deuxième saillie (44).

8. Dispositif de guidage linéaire selon l'une quelconque des revendications 1 à 7, sachant que la cage (4) est disposée entre le rail (2) et le coulisseau (3).

9. Dispositif de guidage linéaire selon l'une quelconque des revendications 1 à 8, sachant que la cage (4) comporte une pluralité de corps de roulement (5), qui viennent respectivement en application pouvant rouler sur le coulisseau (3) et sur le rail (2).

10. Dispositif de guidage linéaire selon l'une quelconque des revendications 1 à 9, sachant que la cage (4) comporte un corps de base (21), de préférence un corps de base constitué pour l'essentiel plan et deux branches (22a, 22b) s'éloignant, de préférence s'éloignant perpendiculairement du corps de base (21), qui sont constituées pour recevoir le rail (2) dans un espace intermédiaire formé entre les deux branches.

11. Dispositif de guidage linéaire selon l'une quelconque des revendications 1 à 10, sachant que le coulisseau (3) est constitué dans un plan perpendiculairement à la direction longitudinale (L) pour l'essentiel en forme de U, sachant que les branches (32a, 32b) du coulisseau en forme de U sont constituées pour recevoir la cage (4) dans un espace intermédiaire formé entre les deux branches.

12. Dispositif de guidage linéaire selon l'une quelconque des revendications 1 à 11, comprenant en plus une butée finale, qui limite le mouvement de la cage (4) par rapport au rail (2) et/ou au coulisseau (3) dans la direction longitudinale (L), sachant que la butée finale est constituée de préférence sous la forme d'une ouverture (25) constituée longitudinalement dans la cage (4) et d'une vis (10) s'étendant à travers l'ouverture, qui est fixée au rail (2) ou au coulisseau (3).

13. Dispositif de guidage linéaire selon l'une quelconque des revendications 1 à 12, sachant que la première et/ou la deuxième structure d'avance est constituée sous la forme d'une crémaillère (8, 9).

14. Dispositif de guidage linéaire selon l'une quelconque des revendications 1 à 13, comprenant en plus un système d'entraînement, qui est constitué pour entraîner le coulisseau (3) pouvant se déplacer par rapport au rail (2) le long de la direction longitudinale (L).
